(19) Europäisches Patentamt
European Patent Office
Office européen des brevets

(11) **EP 2 015 253 A1**

(12) **EUROPEAN PATENT APPLICATION**

(43) Date of publication:
**14.01.2009 Bulletin 2009/03**

(51) Int Cl.:
*G06T 7/20* (2006.01)   *B60R 1/00* (2006.01)

(21) Application number: **08012316.9**

(22) Date of filing: **08.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **09.07.2007 JP 2007179743**

(71) Applicant: **Sanyo Electric Co., Ltd.**
**Moriguchi-shi, Osaka (JP)**

(72) Inventor: **Yang, Changhui**
**Moriguchi City**
**Osaka 570-8677 (JP)**

(74) Representative: **Glawe, Delfs, Moll**
**Patentanwälte**
**Postfach 26 01 62**
**80058 München (DE)**

(54) **Driving support system and vehicle**

(57)    A driving support system includes a camera fitted to a moving body to photograph the surrounding thereof, obtains from the camera a plurality of chronologically ordered camera images, and outputs a display image generated from the camera images to a display device. The driving support system has: a movement vector deriving part that extracts a characteristic point from a reference camera image included in the plurality of camera images and that also detects the position of the characteristic point on each of the camera images through tracing processing to thereby derive the movement vector of the characteristic point between the different camera images; and an estimation part that estimates, based on the movement vector, the movement speed of the moving body and the rotation angle in the movement of the moving body. Based on the camera images and the estimated movement speed and the estimated rotation angle, the display image is generated.

FIG.4

```
              START
                │
S11   TAKE IN PHOTOGRAPHED IMAGES AT
              DIFFERENT TIMES
                │
S12   EXTRACT CHARACTERISTIC POINTS
                │
S13   TRACE CHARACTERISTIC POINTS
      (CALCULATE MOVEMENT VECTORS OF
           CHARACTERISTIC POINTS)
                │
S14   ·MAP MOVEMENT VECTORS OF
      CHARACTERISTIC POINTS ONTO BIRD'S-EYE
           VIEW COORDINATE SYSTEM
      ·SUBJECT PHOTOGRAPHED IMAGES TO
           BIRD'S-EYE CONVERSION
                │
S15   ESTIMATE VEHICLE SPEED AND ROTATION
      ANGLE FROM CHARACTERISTIC POINTS
           AND MOVEMENT VECTORS ON
      BIRD'S-EYE VIEW COORDINATE SYSTEM
                │
S16   CALCULATE POSITIONS OF VEHICLE TRAVEL
      GUIDE LINES ON BIRD'S-EYE VIEW
      COORDINATE SYSTEM BASED ON VEHICLE
           SPEED AND ROTATION ANGLE
                │
S17   SUPERIMPOSE VEHICLE TRAVEL GUIDE
      LINES ON BIRD'S-EYE VIEW IMAGE TO
      THEREBY GENERATE DISPLAY IMAGE
                │
               END
```

EP 2 015 253 A1

**Description**

**BACKGROUND OF THE INVENTION**

1. Field of the Invention

The present invention relates to a driving support system. More specifically, the invention relates to a technology for estimating, based on images photographed by a camera fitted to a moving body, the movement speed and rotation angle of the moving body. The invention also relates to a vehicle using this driving support system.

2. Description of Related Arts

A system has been suggested which supports driving operation such as parking by displaying guide lines corresponding to a vehicle travel direction in such a manner as to be superimposed on an image photographed by a camera installed in the vehicle. Such a system is disclosed, for example, in Japanese Patent No. 3833241. Estimating the guide lines requires vehicle speed and vehicle rotation angle information. Some conventional methods require the vehicle speed and rotation angle information from a special measuring device such as a vehicle speed sensor and a steering angle sensor, which complicates system construction and also lacks practicality (see Japanese Patent No. 3833241).

Moreover, a technique has been suggested which estimates an obstacle region based on a difference image between two bird's-eye view images (see JP-A-2006-268076) .

**SUMMARY OF THE INVENTION**

An object of the present invention is to provide a driving support system that contributes to facilitation of system construction. Another object of the invention is to provide a vehicle employing such a driving support system.

According to one aspect of the invention, a driving support system that includes a camera fitted to a moving body to photograph the surrounding thereof, that obtains from the camera a plurality of chronologically ordered camera images, and that outputs a display image generated from the camera images to a display device is provided with: a movement vector deriving part that extracts a characteristic point from a reference camera image included in the plurality of camera images and that also detects the position of the characteristic point on each of the camera images through tracing processing to thereby derive the movement vector of the characteristic point between the different camera images; and an estimation part that estimates, based on the movement vector, the movement speed of the moving body and the rotation angle in the movement of the moving body. Here, based on the camera images and the estimated movement speed and the estimated rotation angle, the display image is generated.

This makes it possible to estimate the movement speed and rotation angle without the need for a special measuring device, and thus makes system construction easy.

Specifically, for example, the driving support system described above further is provided with a mapping part that maps the characteristic point and the movement vector on the coordinate system of the camera images onto a predetermined bird's-eye view coordinate system through coordinate conversion. Here, the estimation part, based on the movement vector on the bird's-eye view coordinate system arranged in accordance with the position of the characteristic point on the bird's-eye view coordinate system, estimates the movement speed and the rotation angle.

More specifically, for example, the plurality of camera images include first, second, and third camera images obtained at first, second, and third times that come sequentially. Here, the mapping part maps onto the bird's-eye view coordinate system the characteristic point on each of the first to third camera images, the movement vector of the characteristic point between the first and second camera images, and the movement vector of the characteristic point between the second and third camera images. Moreover, when the movement vector of the characteristic point between the first and second camera images and the movement vector of the characteristic point between the second and third camera images are called the first bird's-eye movement vector and the second bird's-eye movement vector, respectively, the mapping part arranges the start point of the first bird's-eye movement vector at the position of the characteristic point at the first time on the bird's-eye view coordinate system, arranges the end point of the first bird's-eye movement vector and the start point of the second bird's-eye movement vector at the position of the characteristic point at the second time on the bird's-eye view coordinate system, and arranges the end point of the second bird's-eye movement vector at the position of the characteristic point at the third time on the bird's-eye view coordinate system. Furthermore, the estimation part, based on the first and second bird's-eye movement vectors and the position of the moving body on the bird's-eye view coordinate system, estimates the movement speed and the rotation angle.

For example, the driving support system described above is further provided with: a bird's-eye conversion part that subjects the coordinates of each of the camera images to coordinate conversion onto a predetermined bird's-eye view coordinate system to thereby convert each of the camera images into a bird's-eye view image; and a passage area estimation part that estimates the predicted passage area of the moving body on the bird's-eye view coordinate system based on the estimated movement speed, the estimated rotation angle, and the position of the moving body on the bird's-eye view coordinate system. Here, an index in accordance with the predicted passage area is superimposed on the bird's-eye view image to thereby generate the display image.

For example, the driving support system described above is further provided with: a bird's-eye conversion part that subjects the coordinates of each of the camera images to coordinate conversion onto a predetermined bird's-eye view coordinate system to thereby convert each of the camera images into a bird's-eye view image; and a solid object region estimation part that makes, through image matching, position adjustment of two bird's-eye view images based on two camera images obtained at mutually different times and that then obtains the difference between the two bird's-eye view images to thereby estimate the position, on the bird's-eye view coordinate system, of a solid (three-dimensional) object region having a height.

For example, the driving support system described above is further provided with a bird's-eye conversion part that subjects the coordinates of each of the camera images to coordinate conversion onto a predetermined bird's-eye view coordinate system to thereby convert each of the camera images into a bird's-eye view image. Here, when two bird's-eye view images based on the two camera images obtained at first and second times, which are mutually different, are called the first and second bird's-eye view images, the driving support system is further provided with a solid object region estimation part including a coordinate conversion part; the coordinate conversion part, based on the movement distance of the moving body between the first and second times based on the estimated movement speed and also based on the estimated rotation angle corresponding to the first and second times, converts the coordinates of either of the first and second bird's-eye view images so that the characteristic points on the two bird's-eye view images overlap each other; and the solid object region estimation part, based on the difference between either of the bird's-eye view images subjected to the coordinate conversion and the other bird's-eye view image, estimates the position, on the bird's-eye view coordinate system, of a solid object region having a height.

For example, the driving support system described above is further provided with: a passage area estimation part that estimates the predicted passage area of the moving body on the bird's-eye view coordinate system based on the estimated movement speed and the estimated rotation angle and the position of the moving body on the bird's-eye view coordinate system; and a solid object monitoring part that judges whether or not the predicted passage area and the solid object region overlap each other.

This makes it possible to monitor the danger of collision between the moving body and the solid object.

Furthermore, for example, when it is judged that the predicted passage area and the solid object region overlap each other, the solid object monitoring part, based on the position of the solid object region and the position and the movement speed of the moving body, estimates the time length until the moving body and a solid object corresponding to the solid object region collide with each other.

According to another aspect of the invention, in a vehicle, there is installed any one of the variations of the driving support system described above.

According to the present invention, it is possible to provide a driving support system that contributes to facilitation of system construction.

The significance and benefits of the invention will be clear from the following description of its embodiments. It should however be understood that these embodiments are merely examples of how the invention is implemented, and that the meanings of the terms used to describe the invention and its features are not limited to the specific ones in which they are used in the description of the embodiments.

**BRIEF DESCRIPTION OF THE DRAWINGS**

FIG. 1 is a block diagram showing configuration of a driving support system according to embodiments of the present invention;

FIG. 2 is an external side view of a vehicle to which the driving support system of FIG. 1 is applied;

FIG. 3 is a diagram showing relationship between a camera coordinate system XYZ, a coordinate system $X_{bu}Y_{bu}$ on an image-sensing surface, and a world coordinate system $X_w Y_w Z_w$ according to the embodiments of the invention;

FIG. 4 is a flowchart showing a flow of operation performed for generating a display image according to the embodiments of the invention;

FIGS. 5A, 5B, and 5C are diagrams showing photographed images at times t1, t2, and t3, respectively, in a case where the vehicle of FIG. 2 moves straight backward according to the first embodiment of the invention;

FIG. 6 is a diagram showing movement vectors between the times t1 and t2 of characteristic points on the photographed image according to the first embodiment of the invention;

FIGS. 7A, 7B, and 7C are diagrams showing bird's-eye view images at the times t1, t2, and t3, respectively, corresponding to FIGS. 5A, 5B, and 5C;

FIG. 8 is a diagram showing movement vectors between the times t1 and t2 of characteristic points on a bird's-eye view image according to the first embodiment of the invention;

FIG. 9 is a diagram showing a display image when the vehicle of FIG. 2 moves straight backward according to the first embodiment of the invention;

FIGS. 10A, 10B, and 10C are diagrams showing photographed images at the times t1, t2, and t3, respectively, in a case where the vehicle of FIG. 2 moves backward while making a turn according to the second embodiment of the invention;

FIG. 11 is a diagram showing movement vectors of characteristic points on a photographed image according to the second embodiment of the invention;

FIGS. 12A, 12B, and 12C are diagrams showing bird's-eye view images at the times t1, t2, and t3, respectively, corresponding to FIGS. 10A, 10B, and 10C;

FIG. 13 is a diagram showing movement vectors of a characteristic point on a bird's-eye view image according to the second embodiment of the invention;

FIG. 14 is a diagram illustrating a technique of estimating a vehicle speed and a rotation angle based on the movement vector on a bird's-eye view coordinate system according to the second embodiment of the invention;

FIG. 15 is a diagram showing a display image in a case where the vehicle of FIG. 2 moves backward while making a turn according to the second embodiment of the invention;

FIG. 16 is a flowchart showing a flow of operation for processing of estimating an obstacle region and processing related thereto according to the third embodiment of the invention;

FIG. 17A is a diagram showing an image of an obstacle on the bird's-eye view image at the time t2 after coordinate conversion according to the third embodiment of the invention, FIG. 17B is a diagram showing an image of an obstacle on the bird's-eye view image at the time t3 according to the third embodiment of the invention; and FIG. 17C is a diagram showing an obstacle region estimated based on a difference between the two images according to the third embodiment of the invention;

FIG. 18 is a diagram illustrating positional relationship between the vehicle and the obstacle on the bird's-eye view coordinate system according to the third embodiment of the invention; and

FIG. 19 is a functional block diagram of a driving support system according to the fourth embodiment of the invention.

## DETAILED DESCRIPTION OF PREFERRED EMBODIMENTS

Hereinafter, embodiments of the present invention will be described in detail with reference to the accompanying drawings. In the drawings referenced, the same portions are marked with the same numerals and overlapping description regarding the same portions will be omitted basically. The first to fourth embodiments will be described later, while points common to all the embodiments or points referred to by all the embodiments will be described first.

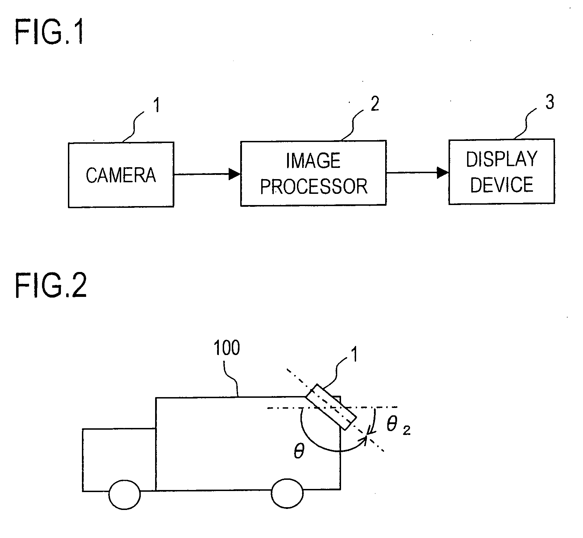

FIG. 1 is a block diagram showing configuration of a driving support system (visual field support system) according to the embodiments of the invention. The driving support system of FIG. 1 includes a camera 1, an image processor 2, and a display device 3. The camera 1 performs photographing and outputs to the image processor 2 a signal representing an image obtained through the photographing (hereinafter referred to as photographed image). The image processor 2 generates a bird's-eye view image by subjecting the photographed image to coordinate conversion, and further generates a display image from the bird's-eye view image. Note that the photographed image serving as a basis for the bird's-eye view image is subjected to lens distortion correction, and the photographed image which has undergone the lens distortion correction is converted into the bird's-eye view image. The image processor 2 outputs to the display device 3 a video signal representing the generated display image, and the display device 3, in accordance with the provided video signal, displays the display image as a video.

Hereinafter, a photographed image means a photographed image which has undergone lens distortion correction. Note, however, that the lens distortion correction is not required in some cases. Moreover, the coordinate conversion performed for generating the bird's-eye view image from the photographed image is called "bird's-eye conversion". A technique of the bird's-eye conversion will be described later.

FIG. 2 is an external side view of a vehicle 100 to which the driving support system of FIG. 1 is applied. As shown in FIG. 2, at the back of the vehicle 100, the camera 1 is arranged in such a manner as to be oriented obliquely downward to the back. The vehicle 100 is, for example, a truck. The angle formed by the horizontal plane and an optical axis of the camera 1 is expressed by either of two kinds of angles: angle expressed by $\theta$, and angle expressed by $\theta_2$ in FIG. 2. The angle $\theta_2$ is typically called a look-down angle or a depression angle. Now, the angle $\theta$ is considered as a tilt angle of the camera 1 with respect to the horizontal plane. Then $90° < \theta < 180°$ and $\theta + \theta_2 = 180°$ hold.

The camera 1 photographs the surrounding of the vehicle 100. In particular, the camera 1 is installed in the vehicle 100 in such a manner as to have a visual field toward the back side of the vehicle 100. The visual field of the camera 1 includes a road surface located behind the vehicle 100. In the description below, it is assumed that the ground surface is on a horizontal plane, and that "height" denotes a height with reference to the ground surface. In the embodiments of the invention, the ground surface and the road surface are synonymous with each other.

As the camera 1, for example, a camera using a CCD (Charge Coupled Device) or a camera using a CMOS (Complementary Mental Oxide Semiconductor) image sensor is used. The image processor 2 is formed with, for example, an integrated circuit. The display device 3 is formed with a liquid crystal display panel or the like. A display device included in a car navigation system or the like may be used as the display device 3 in the driving support system. The image processor 2 can also be incorporated as part of a car navigation system. The image processor 2 and the display device 3 are installed, for example, near a driver seat of the vehicle 100.

[Method of generating a bird's-eye view image]

The image processor 2 converts a photographed image of the camera 1 into a bird's-eye view image through bird's-eye conversion. A technique of this bird's-eye conversion will be described below. Coordinate conversion, like that described below, for generating a bird's-eye view image is typically called perspective projection conversion.

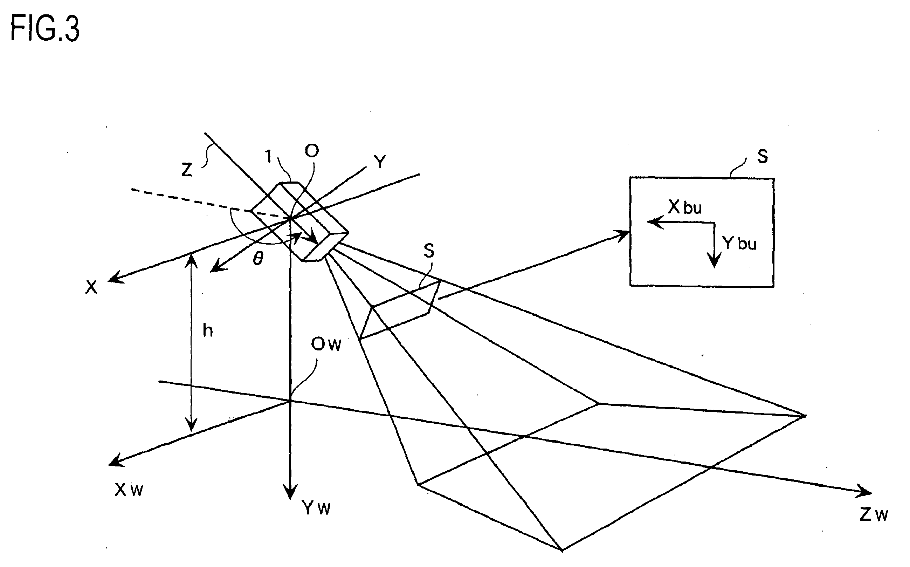

FIG. 3 shows relationship between a camera coordinate system XYZ, a coordinate system $X_{bu}Y_{bu}$ on an image-sensing surface S of the camera 1, and a world coordinate system $X_wY_wZ_w$ including a two-dimensional ground surface coordinate system $X_wZ_w$. The camera coordinate system XYZ is a three-dimensional coordinate system having an X-axis, a Y-axis, and Z-axis as coordinate axes. The coordinate system $X_{bu}Y_{bu}$ on the image-sensing surface S is a two-dimensional coordinate system having an $X_{bu}$-axis and a $Y_{bu}$-axis as coordinate axes. The two-dimensional ground surface coordinate system $X_wZ_w$ is a two-dimensional coordinate system having an $X_w$-axis and a $Z_w$-axis as coordinate axes. The world coordinate system $X_wY_wZ_w$ is a three-dimensional coordinate system having an $X_w$-axis, $Y_w$-axis, and a $Z_w$-axis as coordinate axes.

Hereinafter, the camera coordinate system XYZ, the coordinate system $X_{bu}Y_{bu}$ on the image-sensing surface S, the two-dimensional ground surface coordinate system $X_wZ_w$, and the world coordinate system $X_wY_wZ_w$ may be simply abbreviated as camera coordinate system, coordinate system on the image-sensing surface S, two-dimensional ground surface coordinate system, and world coordinate system.

In the camera coordinate system XYZ, with the optical center of the camera 1 serving as an origin O, the Z-axis is plotted in the optical axis direction, the X-axis is plotted in a direction orthogonal to the Z-axis and also parallel to the ground surface, and the Y-axis is plotted in a direction orthogonal to the Z-axis and the X-axis. In the coordinate system $X_{bu}Y_{bu}$ on the image-sensing surface S, with the center of the image-sensing surface S serving as an origin, the $X_{bu}$-axis is plotted laterally relative to the image-sensing surface S, and the $Y_{bu}$-axis is plotted longitudinally relative to the image-sensing surface S.

In the world coordinate system $X_wY_wZ_w$, where an intersection between the ground surface and a vertical line passing through the origin O of the camera coordinate system XYZ serves as an origin $O_w$, the $Y_w$-axis is plotted in a direction perpendicular to the ground surface, the $X_w$-axis is plotted in a direction parallel to the X-axis of the camera coordinate system XYZ, and the $Z_w$-axis is plotted in a direction orthogonal to the $X_w$-axis and $Y_w$-axis.

The amount of parallel movement between the $X_w$-axis and the X-axis is h, and the direction of this parallel movement is a vertical direction. The obtuse angle formed by the $Z_w$-axis and the Z-axis is equal to the tilt angle θ. Values of h and θ are previously set and provided to the image processor 2.

Coordinates in the camera coordinate system XYZ are expressed as (x, y, z). These x, y, and z are an X-axis component, a Y-axis component, and a Z-axis component, respectively, in the camera coordinate system XYZ.

Coordinates in the world coordinate system $X_wY_wZ_w$ are expressed as $(x_w, y_w, z_w)$. These $x_w$, $y_w$, and $z_w$ are an $X_w$-axis component, a $Y_w$-axis component, and a $Z_w$-axis component, respectively, in the world coordinate system $X_wY_wZ_w$.

Coordinates in the two-dimensional ground surface coordinate system $X_wZ_w$ are expressed as $(x_w, z_w)$. These $x_w$ and $z_w$ are an $X_w$-axis component and a $Z_w$-axis component, respectively, in the two-dimensional ground surface coordinate system $X_wZ_w$, and they are equal to the $X_w$-component and the $Z_w$-axis component in the world coordinate system $X_wY_wZ_w$.

Coordinates in the coordinate system $X_{bu}Y_{bu}$ on the image-sensing surface S are expressed as $(x_{bu}, y_{bu})$. These $x_{bu}$ and $y_{bu}$ are an $X_{bu}$-axis component and a $Y_{bu}$-axis component, respectively, in the coordinate system $X_{bu}Y_{bu}$ on the image-sensing surface S.

A conversion formula for conversion between the coordinates (x, y, z) of the camera coordinate system XYZ and the coordinates $(x_w, y_w, z_w)$ of the world coordinate system $X_wY_wZ_w$ is expressed by formula (1) below:

$$\begin{bmatrix} x \\ y \\ z \end{bmatrix} = \begin{bmatrix} 1 & 0 & 0 \\ 0 & \cos\theta & -\sin\theta \\ 0 & \sin\theta & \cos\theta \end{bmatrix} \left\{ \begin{bmatrix} x_w \\ y_w \\ z_w \end{bmatrix} + \begin{bmatrix} 0 \\ h \\ 0 \end{bmatrix} \right\} \quad (1)$$

Here, the focal length of the camera 1 is defined as f. Then, a conversion formula for conversion between the coordinates $(x_{bu}, y_{bu})$ of the coordinate system $X_{bu}Y_{bu}$ on the image-sensing surface S and the coordinates $(x, y, z)$ of the camera coordinate system XYZ is expressed by formula (2) below:

$$\begin{bmatrix} x_{bu} \\ y_{bu} \end{bmatrix} = \begin{bmatrix} f\dfrac{x}{z} \\ f\dfrac{y}{z} \end{bmatrix} \quad (2)$$

Obtained from the above formulae (1) and (2) is conversion formula (3) for conversion between the coordinates $(x_{bu}, y_{bu})$ of the coordinate system $X_{bu}Y_{bu}$ on the image-sensing surface S and the coordinates $(x_w, z_w)$ of the two-dimensional ground surface coordinate system $X_wZ_w$:

$$\begin{bmatrix} x_{bu} \\ y_{bu} \end{bmatrix} = \begin{bmatrix} \dfrac{fx_w}{h\sin\theta + z_w\cos\theta} \\ \dfrac{(h\cos\theta - z_w\sin\theta)f}{h\sin\theta + z_w\cos\theta} \end{bmatrix} \quad (3)$$

Moreover, although not shown in FIG. 3, a bird's-eye view coordinate system $X_{au}Y_{au}$ as a coordinate system for a bird's-eye view image will be defined. The bird's-eye view coordinate system $X_{au}Y_{au}$ is a two-dimensional coordinate system having an $X_{au}$-axis and a $Y_{au}$-axis as coordinate axes. Coordinates in the bird's-eye view coordinate system $X_{au}Y_{au}$ are expressed as $(x_{au}, y_{au})$. The bird's-eye view image is expressed by pixel signals of a plurality of pixels arrayed two-dimensionally, and the position of each pixel on the bird's-eye view image is expressed by coordinates $(x_{au}, y_{au})$. These $x_{au}$ and $y_{au}$ are an $X_{au}$-axis component and a $Y_{au}$-axis component, respectively, in the bird's-eye view coordinate system $X_{au}Y_{au}$.

The bird's-eye view image is an image obtained by converting a photographed image of the actual camera 1 into an image as observed from a visual point of a virtual camera (hereinafter referred to as virtual visual point). More specifically, the bird's-eye view image is an image obtained by converting the actually photographed image of the camera 1 into an image as observed when the ground surface is vertically looked down. This type of image conversion is typically called visual point conversion.

A plane which coincides with the ground surface and which is defined on the two-dimensional ground surface coordinate system $X_wZ_w$ is parallel to a plane which is defined on the bird's-eye view coordinate system $X_{au}Y_{au}$. Therefore, projection from the two-dimensional ground surface coordinate system $X_wZ_w$ onto the bird's-eye view coordinate system $X_{au}Y_{au}$ of the virtual camera is performed through parallel projection. Where the height of the virtual camera (that is, the height of the virtual visual point) is H, a conversion formula for conversion between the coordinates $(x_w, z_w)$ of the two-dimensional ground surface coordinate system $X_wZ_w$ and the coordinates $(x_{au}, y_{au})$ of the bird's-eye view coordinate system $X_{au}Y_{au}$ is expressed by formula (4) below. The height H of the virtual camera is previously set. Further modifying the formula (4) provides formula (5) below.

$$\begin{bmatrix} x_{au} \\ y_{au} \end{bmatrix} = \frac{f}{H} \begin{bmatrix} x_w \\ z_w \end{bmatrix} \qquad (4)$$

$$\begin{bmatrix} x_w \\ z_w \end{bmatrix} = \frac{H}{f} \begin{bmatrix} x_{au} \\ y_{au} \end{bmatrix} \qquad (5)$$

Substituting the obtained formula (5) for the above formula (3) provides formula (6) below:

$$\begin{bmatrix} x_{bu} \\ y_{bu} \end{bmatrix} = \begin{bmatrix} \dfrac{fHx_{au}}{fh \sin\theta + Hy_{au}\cos\theta} \\ \dfrac{f(fh\cos\theta - Hy_{au}\sin\theta)}{fh \sin\theta + Hy_{au}\cos\theta} \end{bmatrix} \qquad (6)$$

From the above formula (6), formula (7) below for converting the coordinates $(x_{bu}, y_{bu})$ of the coordinate system $X_{bu}Y_{bu}$ on the image-sensing surface S into the coordinates $(x_{au}, y_{au})$ of the bird's-eye view coordinate system $X_{au}Y_{au}$ is obtained:

$$\begin{bmatrix} x_{au} \\ y_{au} \end{bmatrix} = \begin{bmatrix} \dfrac{x_{bu}(fh\sin\theta + Hy_{au}\cos\theta)}{fH} \\ \dfrac{fh(f\cos\theta - y_{bu}\sin\theta)}{H(f\sin\theta + y_{bu}\cos\theta)} \end{bmatrix} \qquad (7)$$

The coordinates $(x_{bu}, y_{bu})$ of the coordinate system $X_{bu}Y_{bu}$ on the image-sensing surface S expresses the coordinates on the photographed image, and thus the photographed image can be converted into a bird's-eye view image by using the above formula (7).

Specifically, in accordance with the formula (7), the bird's-eye view image can be generated by converting the coordinates $(x_{bu}, y_{bu})$ of each pixel of the photographed image into the coordinates $(x_{au}, y_{au})$ of the bird's-eye view coordinate system. The bird's-eye view image is formed of the pixels arrayed in the bird's-eye view coordinate system.

In practice, in accordance with the formula (7), table data is prepared which indicates association between coordinates $(x_{bu}, y_{bu})$ of each pixel on the photographed image and the coordinates $(x_{au}, y_{au})$ of each pixel on the bird's-eye view image, and this is previously stored into a memory (look-up table), not shown. Then the photographed image is converted into the bird's-eye view image by using this table data. Needless to say, the bird's-eye view image may be generated by performing coordinate conversion calculation based on the formula (7) every time a photographed image is obtained.

Hereinafter, as embodiments for further describing the details of operation performed in the driving support system of FIG. 1, first to fourth embodiments will be described. Points described for a certain embodiment also applies to the other embodiments unless any inconsistency is found.

[First embodiment]

First, the first embodiment will be described. The image processor 2 of FIG. 1 takes in photographed images from the camera 1 at a predetermined cycle, sequentially generates display images from the photographed images sequentially obtained, and outputs the latest display image to the display device 3. As a result, on the display device 3, updated display of the latest display image is performed.

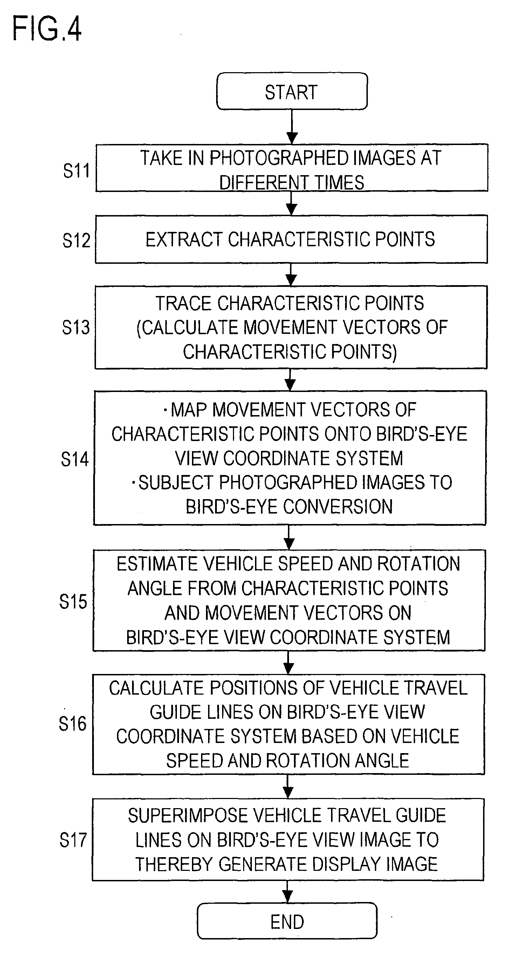

Referring to FIG. 4, a flow of the operation performed for generating one display image will be described. FIG. 4 is a flowchart showing the flow of this operation. Each processing of steps S11 to S17 shown in FIG. 4 is executed by the image processor 2 of FIG. 1.

To generate a characteristic display image according to the invention, a plurality of photographed images photographed at different times are required. Thus, the image processor 2 takes in a plurality of photographed images photographed at different times, and refers to the plurality of photographed images at later processing (step S11). Now assume that the plurality of photographed images taken in includes: the photographed image photographed at a time t1 (hereinafter also referred to simply as photographed image at the time t1), the photographed image photographed at a time t2 (hereinafter also referred to simply as photographed image at the time t2), and the photographed image photographed at a time t3 (hereinafter also referred to simply as photographed image at the time t3). Assuming that the time t2 comes after the time t1, and the time t3 comes after the time t2, a time interval between the time t1 and the time t2 and a time interval between the time t2 and the time t3 are expressed by $\Delta t$ ($\Delta t > 0$).

In the following step S12, characteristic points are extracted from the photographed image at the time t1. A characteristic point is a point which can be discriminated from the surrounding points and also which can be easily traced. Such a characteristic point can be automatically extracted with a well-known characteristic point extractor (not shown) detecting a pixel at which the amounts of change in gradation in horizontal and vertical directions are large. The characteristic point extractor is, for example, a Harris corner detector or a SUSAN corner detector. The characteristic point to be extracted is, for example, an intersection with a white line drawn on the road surface or an end point thereof, dirt or crack on the road surface, or the like, and assumed as a fixed point located on the road surface and having no height.

Now, for more detailed description, assumed is a case where a rectangular figure is drawn on the road surface behind the vehicle 100 and four vertexes of this rectangle are treated as four characteristic points. Then, referred to as an example is a case where these four characteristic points are extracted from the photographed image at the time t1. The four characteristic points are composed of first, second, third, and fourth characteristic points. The rectangular figure described above is a rectangular parking frame in a parking lot.

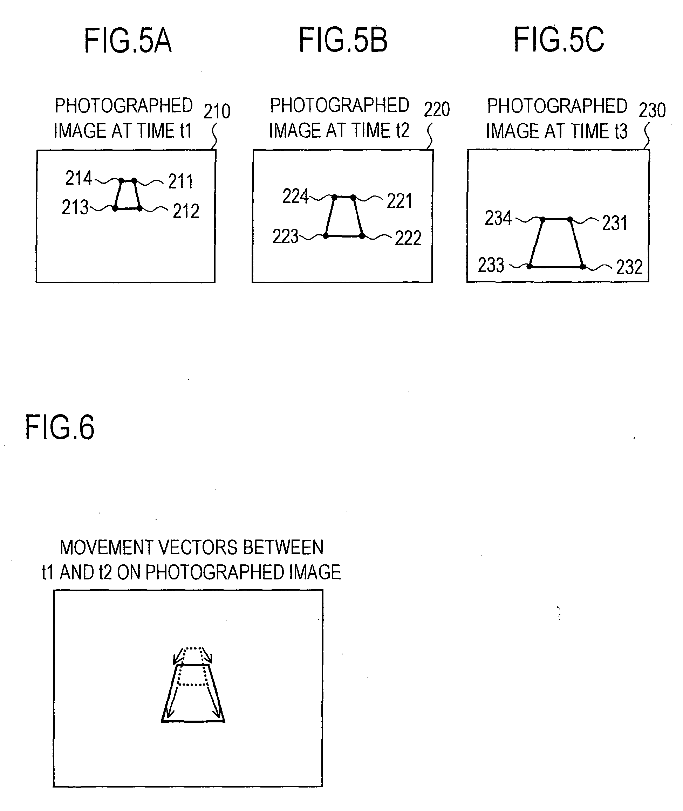

Assumed in this embodiment is a case where the vehicle 100 moves straight backward. Images 210, 220, and 230 of FIGS. 5A, 5B, and 5C represent the photographed images at the time t1, the time t2, and the time t3, respectively, in a case where the vehicle 100 moves straight backward. Then in FIG. 5A, four points marked with numeral 211 to 214 are four characteristic points extracted from the image 210, and the points 211, 212, 213, and 214 correspond to the first, second, third, and fourth characteristic points, respectively.

In each of the figures representing a photographed image, a bird's-eye view image, and a display image, a direction downward of an image coincides with a direction in which the vehicle 100 is located. The travel direction of the vehicle 100 when the vehicle 100 moves straight forward or backward coincides with a vertical direction (up/down direction) on the photographed image, the bird's-eye view image, and the display image. On the bird's-eye view image and the display image, the vertical direction coincides with a direction of the $Y_{au}$-axis parallel to the $Z_w$-axis (see FIG. 3).

In step S13 following step S12, characteristic point tracing processing is performed. As the characteristic point tracing processing, a well-known technique can be adopted. When a photographed image photographed at a certain time is taken as a first reference image and a photographed image photographed at a time after the aforementioned time is taken as a second reference image, the tracing processing is performed through comparison between the first and second reference images. More specifically, for example, a region near the position of a characteristic point on the first reference image is taken as a characteristic point search region, and the position of a characteristic point on the second reference image is identified by performing image matching processing in a characteristic point search region of the second reference image. In the image matching processing, for example, a template is formed with an image within a rectangular region having its center at the position of the characteristic point on the first reference image, and a degree of similarity between this template and an image within the characteristic point search region of the second reference image is calculated. From the calculated degree of similarity, the position of the characteristic point on the second reference image is identified

By performing the tracing processing while treating the photographed images at the times t1 and t2 as the first and second reference images, respectively, the position of the characteristic point on the photographed image at the time t2 is obtained, and then performing tracing processing while treating the photographed images at the times t2 and t3 as the first and second reference images, respectively, the position of the characteristic point on the photographed image at the time t3 is obtained.

The first to fourth characteristic points on the image 220 identified by such tracing processing are expressed by points 221, 222, 223, and 224, respectively, in FIG. 5B, and the first to fourth characteristic points on the image 230 identified by such tracing processing are expressed by points 231, 232, 233, and 234, respectively, in FIG. 5C.

In step S13, in addition, a movement vector of each characteristic point between the photographed images at the times t1 and t2 and a movement vector of each characteristic point between the photographed images at the times t2 and t3 are obtained. A movement vector of a characteristic point of interest on two images represents the direction and magnitude of movement of this characteristic point between these two images.

FIG. 6 shows, by four arrowed straight lines, movement vectors of the first to fourth characteristic points between the image 210 and the image 220. When the parking frame is photographed by the camera 1 during backward movement of the vehicle 100, as shown in FIG. 6, the movement vectors of the characteristic points, although these stay still on the road surface, differ from each other. Thus, in this embodiment, in step S14 following step S13, the characteristic points and the movement vectors of the characteristic points are mapped (projected) onto a bird's-eye view coordinate system.

Where coordinate values of a point of interest on the photographed image are expressed by $(x_{bu}, y_{bu})$ and coordinate values of this point of interest on the bird's-eye view coordinate system are expressed by $(x_{au}, y_{au})$, relationship between the both coordinate values is expressed by the above formula (7). Therefore, in step S14, the coordinate values $(x_{bu}, y_{bu})$ of the first to fourth characteristic points of each of the photographed images at the times t1 to t3 are converted into coordinate values $(x_{au}, y_{au})$ on a bird's-eye view coordinate system in accordance with the formula (7), and also coordinate value $(x_{bu}, y_{bu})$ of an end point and a start point of each of the movement vectors obtained in step S13 is subjected to coordinate conversion into coordinate values $(x_{au}, y_{au})$ on the bird's-eye view coordinate system in accordance with the formula (7) to thereby obtain each movement vector on the bird's-eye view coordinate system. The coordinate values of characteristic points on the bird's-eye view coordinate system represent coordinate values of start points and end points of movement vectors on the bird's-eye view coordinate system; thus, obtaining the former automatically provides the latter or obtaining the latter automatically provides the former.

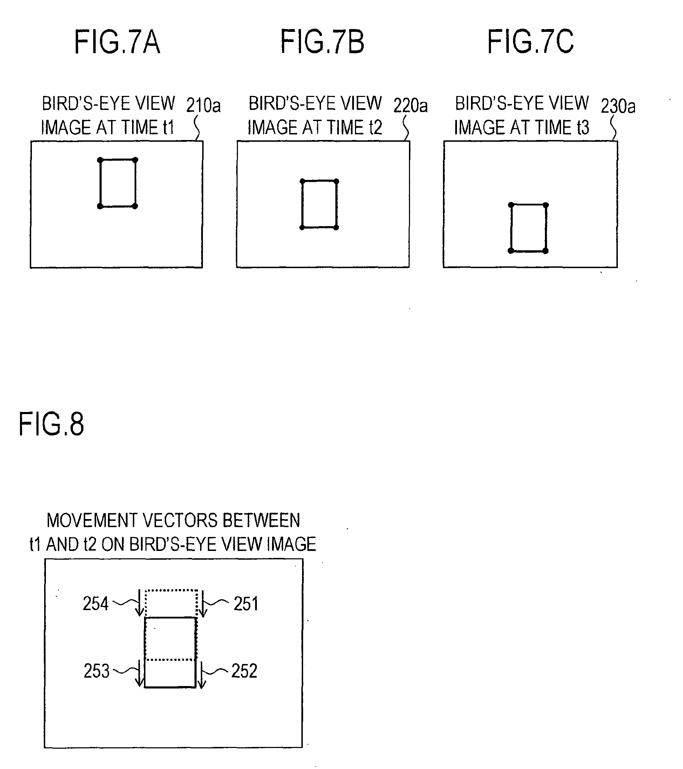

Moreover, in step S14, each of the photographed images taken in in step S11 is converted into a bird's-eye view image in accordance with the above formula (7). Bird's-eye view images based on the photographed images at the times t1, t2, and t3 are called bird's-eye view images at the times t1, t2, and t3, respectively. Images 210a, 220a, and 230a of FIGS. 7A, 7B, and 7C represent the bird's-eye view images at the times t1, t2, and t3, respectively, based on the images 210, 220, and 230 of FIGS. 5A, 5B, and 5C. FIG. 8 shows movement vectors 251 to 254 of the first to fourth characteristic points between the image 210a and the image 220a. As shown in FIG. 8, on the bird's-eye view image, movements of the four characteristic points are identical. Positions of a start point and an end point of the movement vector 251 respectively coincide with the position of the first characteristic point on the image 210a and the position of the first characteristic point on the image 220a (the same applies to the movement vectors 252 to 254).

Thereafter, in step S15, from the characteristic points and the movement vectors on the bird's-eye view coordinate system obtained in step S14, a movement speed of the vehicle 100 and a rotation angle in the movement of the vehicle 100 are estimated. Hereinafter, the movement speed of the vehicle 100 is called vehicle speed. The rotation angle described above corresponds to a steering angle of the vehicle 100.

In this embodiment, since the vehicle 100 moves straight backward, the rotation angle to be obtained is 0°. More specifically, the movement vector of the first characteristic point between the bird's-eye view images at the times t1 and t2 and the movement vector of the first characteristic point between the bird's-eye view images at the times t2 and t3 are compared with each other. If directions of the two vectors are the same, the rotation angle is estimated to be 0°. If any of the movement vectors 251 to 254 of FIG. 8 or an average vector of these movement vectors 251 to 254 is oriented in the vertical direction of the bird's-eye view images, the rotation angle may be estimated to be 0°.

The vehicle speed estimation exploits the fact that the bird's-eye view coordinate system is obtained by subjecting the two-dimensional ground surface coordinate system to scale conversion (refer to the above formula (4) or (5)). Specifically, where a conversion rate for this scale conversion is K, and the magnitude of any of the movement vectors 251 to 254 on the bird's-eye view coordinate system or the magnitude of the average vector of the movement vectors 251 to 254 is L, a vehicle speed SP between the times t1 and t2 is calculated through estimation by formula (8) below. The vehicle speed SP is a speed defined on the two-dimensional ground surface coordinate system $X_w Z_w$ of FIG. 3, and from the formula (5), K=H/f. As described above, the time interval between the times t1 and t2 is $\Delta t$.

$$SP = K \times L / \Delta t \tag{8}$$

After step S15, the processing proceeds to step S16. In step S16, based on the vehicle speed and rotation angle estimated in step S15, positions of vehicle travel guide lines on the bird's-eye view coordinate system are calculated, and thereafter in step S17, the vehicle travel guide lines are superimposed on the bird's-eye view image obtained in step S14 to thereby generate a display image. The display image is, as is the bird's-eye view image, also an image on the bird's-eye view coordinate system.

As the bird's-eye view image and the vehicle travel guide lines for generating the display image, a bird's-eye view image based on a latest photographed image and latest vehicle travel guide lines are used. For example, after the photographed images at the times t1 to t3 are obtained, the vehicle speed and the rotation angle between the times t2 and t3 are estimated, and when the latest vehicle travel guide lines are estimated based on these, these latest vehicle travel guide lines are superimposed on the bird's-eye view image at the time t3 to thereby generate a latest display image.

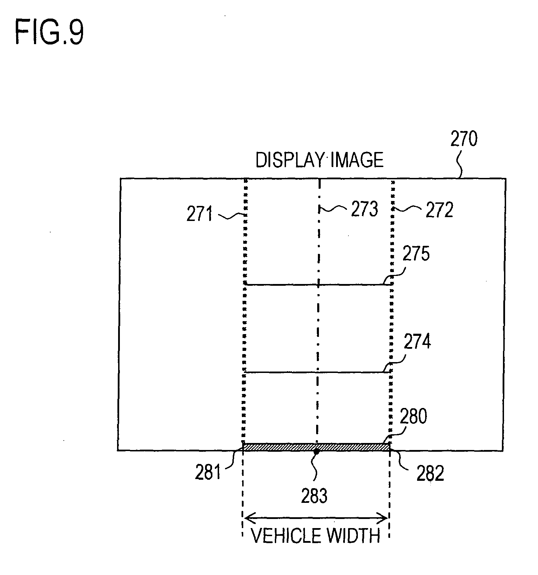

FIG. 9 shows the generated display image 270. In the display image 270, a shaded region marked with numeral 280 and extending horizontally represents a rear end part of the vehicle 100 based on actual photographing by the camera 1 or a rear end part of the vehicle 100 added to the bird's-eye view image by the image processor 2. A length between a left end 281 and a right end 282 of the rear end part 280 is a vehicle width of the vehicle 100 on the bird's-eye view coordinate system. Moreover, a middle point between the left end 281 and the right end 282 is referred to by numeral 283. The left end 281, the right end 282, and the middle point 283 are located on a horizontal line at the lowest side of the display image (or bird's-eye view image).

In camera calibration processing performed at the time of fitting the camera 1 to the vehicle 100, positions of the left end 281, the right end 282, and the middle point 283 on the bird's-eye view coordinate system are defined, and the image processor 2 previously recognizes these positions before the display image is generated (the camera calibration processing is performed prior to execution of the operation of FIG. 4). On the bird's-eye view coordinate system (bird's-eye view image or display image), a center line of the vehicle 100, which is parallel to the vertical direction of the image, passes through the middle point 283.

The vehicle travel guide lines drawn on the display image include: two end part guide lines through which the both end parts of the vehicle 100 are predicted to pass; and one center guide line through which a central part of the vehicle 100 is predicted to pass. On the display image 270, the two end part guide lines are expressed by broken lines 271 and 272, and the center guide line is expressed by a chain line 273. When the vehicle 100 moves straight backward as in this embodiment, the end part guide lines can be expressed by extension lines of the lines demarcating the vehicle width of the vehicle 100. Specifically, on the display image 270, a straight line passing through the left end 281 and also parallel to the vertical direction of the image and a straight line passing through the right end 282 and also parallel to the vertical direction of the image are provided as the end part guide lines, and a straight line passing through the middle point 283 and also parallel to the vertical direction of the image is provided as the center guide line. An area sandwiched between the two end part guide lines corresponds to an area through which the body of the vehicle 100 is predicted to pass in the future, i.e., a future passage area (predicted passage area) of the vehicle 100 on the bird's-eye view coordinate system.

On the display image, first and second distance lines each representing a distance from the vehicle 100 are superimposed. On the display image 270, solid lines 274 and 275 represent the first and second distance lines, respectively. The first and second distance lines indicate, for example, portions located at a distance of 1 m (meter) and 2 m (meters) from the rear end of the vehicle 100. A coordinate value $z_w$ in the $Z_w$-axis direction in the two-dimensional ground surface coordinate system $X_w Z_w$ expresses the distance from the vehicle 100, and thus the image processor 2 can obtain, from the above formula (4) or (5), positions of the first and second distance lines on the display image.

[Second Embodiment]

Next, the second embodiment will be described. The second embodiment is based on the assumption that the vehicle 100 moves backward while making a turn, and a flow of operation performed for generating a display image will be described. A flowchart indicating the flow of this operation is the same as that of FIG. 4 in the first embodiment, and thus this embodiment also refers to FIG. 4. All the contents described in the first embodiment also apply to the second embodiment unless any inconsistency is found.

First, in step S11, the image processor 2 takes in a plurality of photographed images photographed at different times (step S11). As in the first embodiment, the plurality of photographed images taken in include photographed images at times t1 to t3.

In following step S12, characteristic, points are extracted from the photographed image at the time t1. As in the first embodiment, assumed is a case where a rectangular figure is drawn on the road surface behind the vehicle 100 and four vertexes of this rectangle are treated as four characteristic points. Then, referred to as an example is a case where these four characteristic points are extracted from the photographed image at the time t1. The four characteristic points are composed of first, second, third, and fourth characteristic points. The rectangular figure described above is a rectangular parking frame in a parking lot.

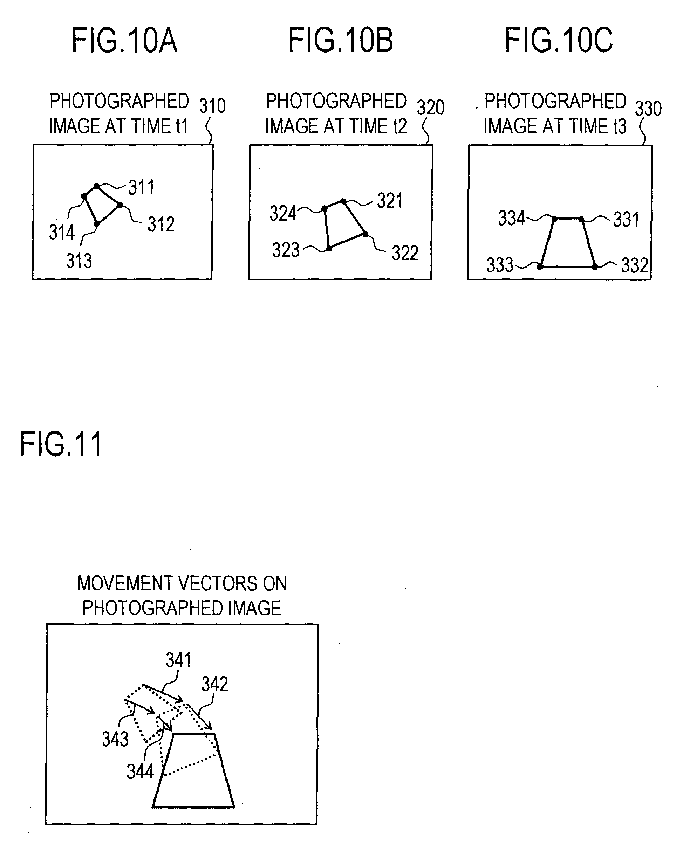

Images 310, 320, and 330 of FIGS. 10A, 10B, and 10C represent the photographed images at the time t1, the time t2, and the time t3, respectively, in a case where the vehicle 100 moves backward while making a turn. In FIG. 10A, four points marked with numerals 311 to 314 are four characteristic points extracted from the image 310, and the points 311, 312, 313, and 314 correspond to the first, second, third, and fourth characteristic points, respectively.

In step S13 following step S12, as in the first embodiment, characteristic point tracing processing is performed to thereby obtain positions of the first to fourth characteristic points in each of the images 320 and 330. The first to fourth characteristic points on the image 320 identified by this tracing processing are expressed by points 321, 322, 323, and 324, respectively, in FIG. 10B, and the first to fourth characteristic points on the image 330 identified by this tracing processing are expressed by points 331, 332, 333, and 334, respectively, in FIG. 10C.

In step S13, in addition, a movement vector of each characteristic point between the photographed images at the times t1 and t2 and a movement vector of each characteristic point between the photographed images at the times t2 and t3 are obtained. FIG. 11 shows part of the movement vectors obtained. The movement vectors 341, 342, 343, and 344 are the movement vector of the first characteristic point between the images 310 and 320, the movement vector of the first characteristic point between the images 320 and 330, the movement vector of the fourth characteristic point between the images 310 and 320, and the movement vector of the fourth characteristic point between the images 320 and 330, respectively.

In following step S14, as in the first embodiment, the characteristic points and movement vectors obtained in step S13 are mapped (projected) onto a bird's-eye view coordinate system. Specifically, coordinate values $(x_{bu}, y_{bu})$ of the first to fourth characteristic points of each of the photographed images at the times t1 to t3 are converted into coordinate values $(x_{au}, y_{au})$ on the bird's-eye view coordinate system in accordance with the formula (7), and also coordinate value $(x_{bu}, y_{bu})$ of an end point and a start point of each movement vector obtained in step S13 is subjected to coordinate conversion into coordinate values $(x_{au}, y_{au})$ on the bird's-eye view coordinate system in accordance with the formula (7) to thereby obtain each movement vector on the bird's-eye view coordinate system.

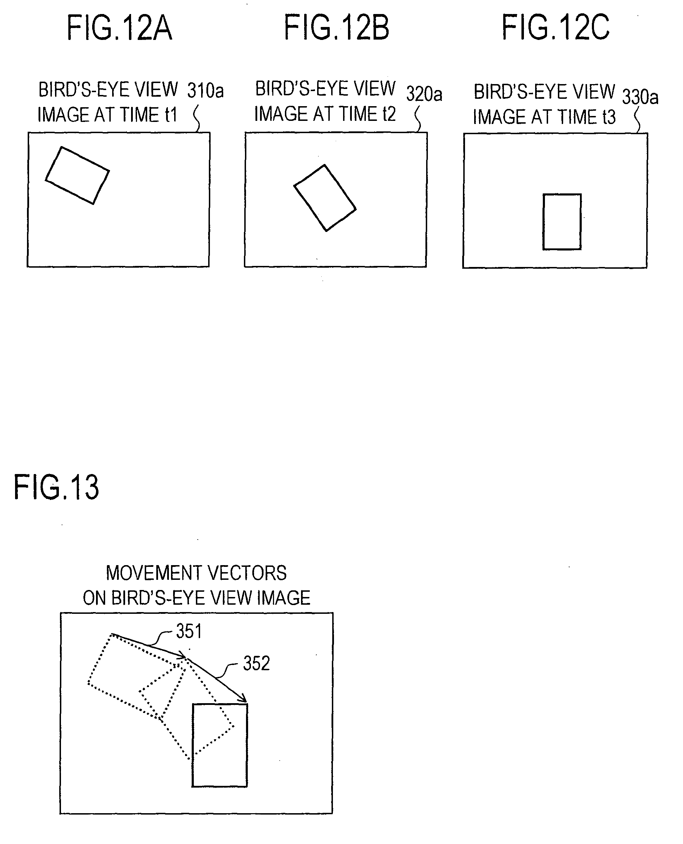

Further, in step S14, each of the photographed images at the times t1 to t3 taken in in step S11 is converted into a bird's-eye view image in accordance with the above formula (7). Images 310a, 320a, and 330a of FIGS. 12A, 12B, and 12C represent the bird's-eye view images at the times t1, t2, and t3, respectively, based on the images 310, 320, and 330 of FIGS. 10A, 10B, and 10C. FIG. 13 shows a movement vector 351 of the first characteristic point between the images 310a and 320a and a movement vector 352 of the first characteristic point between the images 320a and 330a, which are obtained in step S14. The movement vectors 351 and 352 are movement vectors on the bird's-eye view coordinate system (bird's-eye view image).

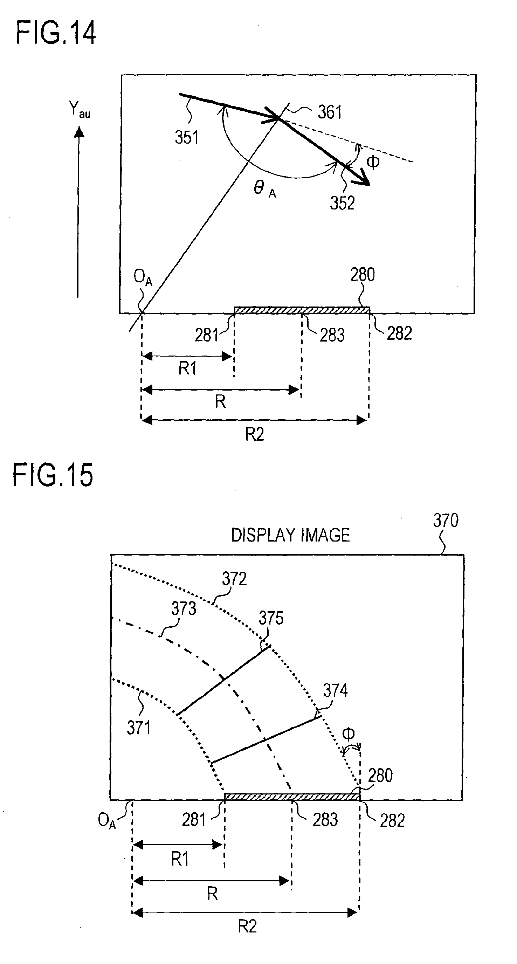

Thereafter, in step S15, from the characteristic points and the movement vectors on the bird's-eye view coordinate system obtained in step S14, a movement speed of the vehicle 100 and a rotation angle in the movement of the vehicle 100 are estimated. This estimation technique will be described, referring to FIG. 14. FIG. 14 shows the same movement vectors 351 and 352 as those shown in FIG. 13. Through the mapping in step S14, a start point position of the movement vector 351 coincides with a position of the first characteristic point at the time t1 on the bird's-eye view coordinate system (that is, position of the first characteristic point on the bird's-eye view image 310a of FIG. 12A). An end point position of the movement vector 351 and a start point position of the movement vector 352 coincide with a position of the first characteristic point at the time t2 on the bird's-eye view coordinate system (that is, position of the first characteristic point on the bird's-eye view image 320a of FIG. 12B). An end point position of the movement vector 352 coincides with a position of the first characteristic point at the time t3 on the bird's-eye view coordinate system (that is, position of the first characteristic point on the bird's-eye view image 330a of FIG. 12C).

In FIG. 14, for explanatory purposes, on one bird's-eye view image 360, the movement vectors 351 and 352, the rear end part 280, the left end 281, the right end 282, and the middle point 283 of the vehicle 100 described in the first embodiment are shown. The angle formed by the movement vectors 351 and 352 is expressed either as an angle over 180 degrees or as an angle below 180 degrees, and of these angles, the angle below 180 degrees is expressed by $\theta_A$. Then a supplementary angle of the angle $\theta_A$ is expressed by $\Phi$ (that is, $\theta_A + \Phi = 180°$). This supplementary angle $\Phi$ is the rotation angle of the vehicle 100 to be estimated in step S15. In this example, the rotation angle $\Phi$ is a rotation angle of the vehicle 100 between the times t2 and t3 (or between the times t1 and t2).

Further, an intersection between a straight line 361 passing through an end point of the movement vector 351 on the bird's-eye view image 360 and equally halving the angle $\theta_A$ and a line extended from the rear end part 280 of the vehicle 100 in the vehicle width direction is expressed by $O_A$. The line extended from the rear end part 280 of the vehicle 100 in the vehicle width direction is a line passing through the rearmost end of the vehicle 100 and also parallel to a horizontal direction of the image. FIG. 14 assumes a case where the line extended from the rear end part 280 of the vehicle 100 in the vehicle width direction lies on a horizontal line located at the lowest side of the image. The image processor 2 estimates a position of the intersection $O_A$ as a position of a rotation center of the vehicle 100 on the bird's-eye view image 360. Hereinafter, the intersection $O_A$ is called a rotation center $O_A$.

Moreover, on the bird's-eye view image 360, a distance between the rotation center $O_A$ and the middle point 283 passing through the center line of the vehicle 100 in the $Y_{au}$-axis direction is expressed by R. Then, in step S15, a movement distance D of the vehicle 100 between the time t2 and t3 (or between the times t1 and t2) can be estimated by formula (9) below, and a vehicle speed SP between the times t2 and t3 (or between the times t1 and t2) can be estimated by formula (10) below. The movement distance D and the vehicle speed SP are a distance and a speed defined on the two-dimensional ground surface coordinate system $X_w Z_w$ of FIG. 3, and K is, as described above, a conversion rate for scale conversion between the bird's-eye view coordinate system and the two-dimensional ground surface coordinate system.

$$D = K \times R \times \Phi \tag{9}$$

$$S = K \times R \times \Phi / \Delta t \tag{10}$$

In this manner, from the movement vectors 351 and 352 on the bird's-eye view image (bird's-eye view coordinate system) 360 and the vehicle position information, the movement distance D, the vehicle speed SP, and the rotation angle $\Phi$ are obtained. The vehicle position information is information representing arrangement information of the vehicle 100 on the bird's-eye view image (bird's-eye view coordinate system) 360. This vehicle position information identifies positions of "the line extended from the rear end part 280 of the vehicle 100 in the vehicle width direction" and "the left end 281, the right end 282, and the middle point 283" on the bird's-eye view image (bird's-eye view coordinate system) 360. Such vehicle position information is set at, for example, a stage of camera calibration processing, and is previously provided to the image processor 2 prior to the operation of FIG. 4.

Moreover, on the bird's-eye view image 360, a distance between the rotation center $O_A$ and the left end 281 is R1, and a distance between the rotation center $O_A$ and the right end 282 is R2.

After step S15, the processing proceeds to step S16. In step S16, based on the vehicle speed and rotation angle estimated in step S15, positions of vehicle travel guide lines on the bird's-eye view coordinate system are calculated, and thereafter in step S17, the vehicle travel guide lines are superimposed on the bird's-eye view image obtained in step S14 to thereby generate a display image. The display image is, as is the bird's-eye view image, also an image on the bird's-eye view coordinate system.

As the bird's-eye view image and the vehicle travel guide lines for generating the display image, a bird's-eye view image based on a latest photographed image and latest vehicle travel guide lines are used. For example, after the photographed images at the times t1 to t3 are obtained, the vehicle speed and the rotation angle between the times t2 and t3 are estimated, and when the latest vehicle travel guide lines are estimated based on these, these latest vehicle travel guide lines are superimposed on the bird's-eye view image at the time t3 to thereby generate a latest display image.

FIG. 15 shows a display image 370 generated. Also in the display image 370, as in FIG. 9, an image of the left end part 280 of the vehicle 100 is drawn. As described in the first embodiment, the vehicle travel guide lines include two end part guide lines and one center guide line. On the display image 370, the two end part guide lines are expressed by broken lines 371 and 372, and the center guide line is expressed by a chain line 373. One end part guide line 371 is drawn with its start point located at the left end 281, the other end part guide line 372 is drawn with its start point located at the right end 282, and the center guide line 373 is drawn with its start point located at the middle point 283.

The end part guide line 371 is a circular arc whose radius is R1 and whose center is the rotation center $O_A$. This circular arc passes through the left end 281, and a vertical line passing through the left end 281 serves as a tangent line to the circular arc corresponding to the end part guide line 371. The end part guide line 372 is a circular arc whose radius is R2 and whose center is the rotation center $O_A$. This circular arc passes through the right end 282, and a vertical line passing through the right end 282 serves as a tangent line to the circular arc corresponding to the end part guide line 372. The center guide line 373 is a circular arc whose radius is R and whose center is the rotation center $O_A$. This circular arc passes through the middle point 283, and a vertical line passing through the middle point 283 serves as a tangent line to the circular arc corresponding to the center guide line 373. Moreover, as in the first embodiment, on the display image 370, the first and second distance lines 374 and 375 are superimposed.

According to this embodiment, since the vehicle speed and the rotation angle can be estimated without requiring special measuring devices such as a vehicle speed sensor and a steering angle sensor, it is easy to construct a driving support system. Moreover, displaying on the display device 3 a display image obtained as described above supports a visual field of the driver and thus achieves improvement in driving safety.

In this embodiment, the vehicle speed and the rotation angle are estimated based on the movement vector of the first characteristic point, and in accordance with them, a display image is generated. Alternatively, operations such as estimation of the vehicle speed and the rotation angle may be performed based on a movement vector of any other characteristic point. Moreover, the vehicle speed and the rotation angle may be estimated based on movement vectors of a plurality of characteristic points, and this makes it possible to reduce estimation error.

[Third Embodiment]

By using the movement distance D and the rotation angle $\Phi$ calculated in the second embodiment, an obstacle region (solid, i.e., three-dimensional, object region) on a bird's-eye view image can be estimated. As an embodiment related to this estimation, the third embodiment will be described. The third embodiment is carried out in combination with the second embodiment. The points described in the second embodiment all apply to the third embodiment.

The obstacle region corresponds to a region on the bird's-eye view image where an obstacle is drawn. The obstacle is an object (solid object), such as a human being, having a height. Objects such as the road surface forming the ground surface are not obstacles since they have no height.

In bird's-eye conversion, coordinate conversion is performed so that a bird's-eye view image have continuity on the ground surface. Therefore, when two bird's-eye view images are obtained by photographing the same obstacle at mutually different two visual points, in principle, between the two bird's-eye view images, images of the road surface agree with each other but images of the obstacle do not agree with each other (see JP-A-2006-268076). In the third embodiment, by using this characteristic, the obstacle region is estimated.

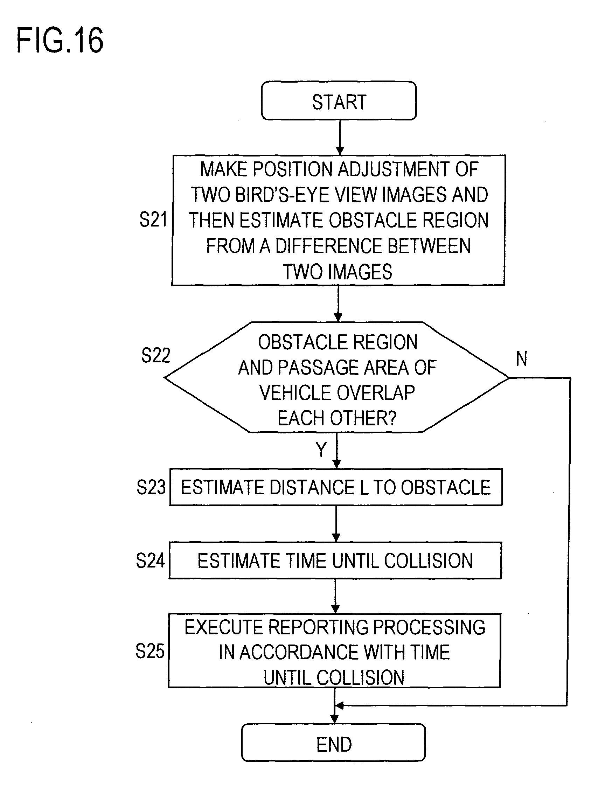

Referring to FIG. 16, a flow of operation performed for obstacle region estimation processing and processing related thereto will be described. FIG. 16 is a flowchart representing the flow of this operation.

The example assumed in the second embodiment also applies to the third embodiment. Further in this embodiment, assumed is a case where one obstacle exists in a visual field of the camera 1. First, after the processing of steps S11 to S16 described in the second embodiment (or the processing of steps S11 to S17 described in the second embodiment) is completed, the processing proceeds to step S21 in FIG. 16.

In step S21, first, position adjustment of the two bird's-eye view images obtained in step S14 of FIG. 4 is made. For detailed explanation, referring to, as an example, a case where position adjustment of the bird's-eye view image 220a at the time t2 and the bird's-eye view image 230a at the time t3 shown in FIGS. 7B and 7C is made, operation performed for the position adjustment carried out in step S21 will be described.

Used in this position adjustment are the rotation angle $\Phi$ of the vehicle 100 between the times t2 and t3 estimated in step S15 of FIG. 4 and the movement distance D of the vehicle 100 between the times t2 and t3 estimated in accordance with the above formula (9). Specifically, based on the rotation angle $\Phi$ and the movement distance D, the bird's-eye view image 220a at the time t2 is subjected to coordinate conversion (coordinate conversion by rotation and parallel movement) by an amount corresponding to the rotation angle $\Phi$ and the movement distance D, whereby positions of the first to fourth characteristic points on the bird's-eye view image 220a already subjected to the coordinate conversion and positions of first to fourth characteristic points on the bird's-eye view image 230a are made coincident with each other.

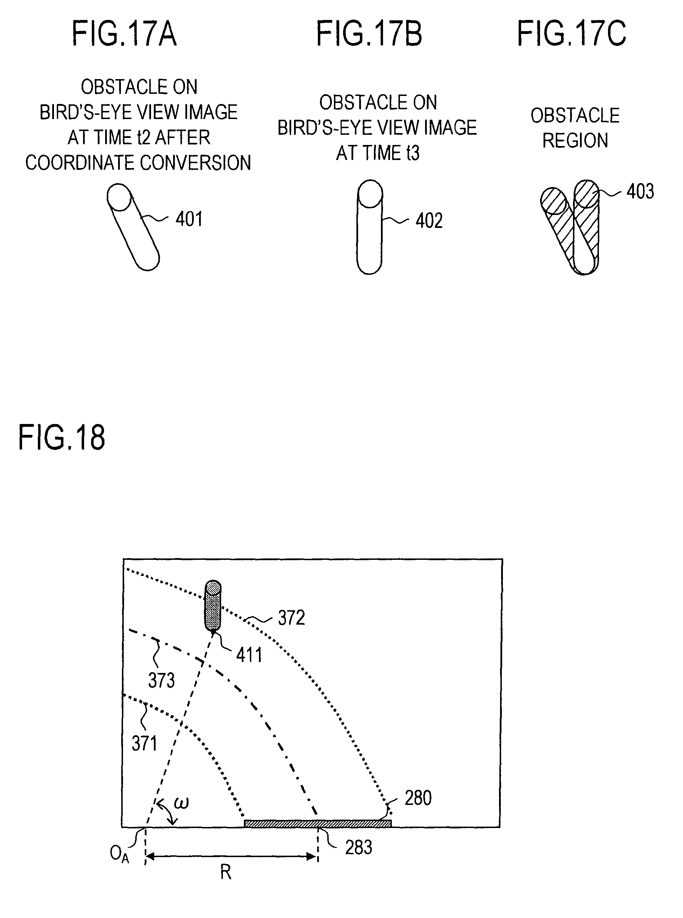

Thereafter, in step S21, by obtaining a difference between the bird's-eye view image 220a already subjected to the coordinate conversion and the bird's-eye view image 230a, a difference image between the two images is generated, from which the obstacle region on the bird's-eye view coordinate system is estimated. An image 401 of FIG. 17A represents an image of an obstacle on the bird's-eye view image 220a already subjected to the coordinate conversion, and an image 402 of FIG. 17B represents an image of the obstacle on the bird's-eye view image 230a. FIG. 17C represents an image of the obstacle on the difference image described above. The image 401 and the image 402 partially agree with each other, but between the image 401 and the image 402, there is a disagreeing portion. Thus, this disagreeing portion appears on the difference image. This disagreeing portion is indicated by a shaded region 403 in FIG. 17C, and in step S21, this shaded region 403 is extracted as the obstacle region to thereby identify the position of the obstacle region on the bird's-eye view coordinate system.

After step S21, the processing proceeds to step S22. In step S22, it is determined whether or not the obstacle region estimated in step S21 overlaps the passage area (predicted passage area) of the vehicle 100. As described above, the passage area of the vehicle 100 is an area sandwiched between the two end part guide lines. Therefore, in this example, it is determined whether or not the estimated obstacle region overlaps the area sandwiched between the end part guide lines 371 and 372 of FIG. 15 (that is, the passage area). If all or part of the former overlaps the latter, the processing proceeds to step S23. On the other hand, if they do not overlap each other, the processing of FIG. 16 ends.

In step S23, the distance L between the rear end part of the vehicle 100 and the obstacle is estimated. FIG. 18 represents a display image (bird's-eye view image) obtained by adding an image of the obstacle to the display image 370 of FIG. 15. An angle formed by a line linking together a lowest point 411 of the obstacle region and a rotation center $O_A$ on this display image (bird's-eye view image) and a line extended from the left end part 280 of the vehicle 100 in the vehicle width direction is expressed by $\omega$ (note that $\omega < 180°$). The lowest point 411 means, of all the pixels forming the obstacle region, the one which is located closest to the vehicle 100 (pixel whose coordinate value $y_{au}$ in the $Y_{au}$-axis direction is smallest).

In step S23, using the angle $\omega$, the distance L described above is estimated through calculation in accordance with formula (11) below. The distance L is a distance defined on the two-dimensional ground surface coordinate system $X_w Z_w$ of FIG. 3, and K is, as described above, a conversion rate for scale conversion between the bird's-eye view coordinate system and two-dimensional ground coordinate system.

$$L = K \times \omega \times R \tag{11}$$

In step S24 following step S23, based on the distance L obtained from the formula (11) and the vehicle speed SP obtained from the formula (10), a time (time length) until the vehicle 100 and the obstacle collide with each other is estimated. This time length is L/S. That is, when the vehicle 100 continuously moves backward with the current vehicle speed SP and the current rotation angle $\Phi$, after passage of time indicated by L/S, the vehicle 100 is predicted to collide with the obstacle.

In following step S25, report processing is performed in accordance with the time (L/S) estimated in step S24. For example, the time (L/S) estimated in step S24 and a predetermined threshold value are compared with each other. If the former is within the latter, it is judged that there is a danger, and reporting (danger reporting) is performed to warn of a danger of collision. This reporting may be achieved by any means, such as by video or audio. For example, attention of the user of the driving support system is drawn by blinking the obstacle region on the display image. Alternatively, the attention of the user is drawn by audio output from a speaker (not shown).

According to this embodiment, the obstacle near the vehicle 100 is automatically detected and also processing of predicting collision is performed, thereby improving the driving safety.

The technique has been exemplarily described which, in step S21, makes position adjustment of the bird's-eye view images at the times t2 and t3 by subjecting the bird's-eye view image 220a at the time t2 to coordinate conversion to thereby estimate the obstacle region. Alternatively, position adjustment of the bird's-eye view images at the times t2 and t3 may be made by subjecting the bird's-eye view image 230a at the time t3, instead of the bird's-eye view image 220a at the time t2, to coordinate conversion.

Moreover, the technique has been exemplarily described which, based on the rotation angle $\Phi$ and the movement distance D, makes the position adjustment of the bird's-eye view images at the times t2 and t3 to thereby estimate the obstacle region, although a technique of the position adjustment is not limited to this. That is, for example, by performing well-known image matching, the position adjustment of the bird's-eye view images at the times t2 and t3 may be made. This also yields the same results as does position adjustment based on the rotation angle $\Phi$ and the movement distance D. More specifically, for example, in order that the first and second characteristic points on the bird's-eye view image at the time t2 respectively overlap the first and second characteristic points on the bird's-eye view image at the time t3, one of the two bird's-eye view images is subjected to coordinate conversion to thereby make the position adjustment of the two bird's-eye view images; thereafter, a difference image between the two bird's-eye view images having undergone the position adjustment is found so that, from this difference image, the obstacle region may be extracted in the same manner as described above.

[Fourth Embodiment]

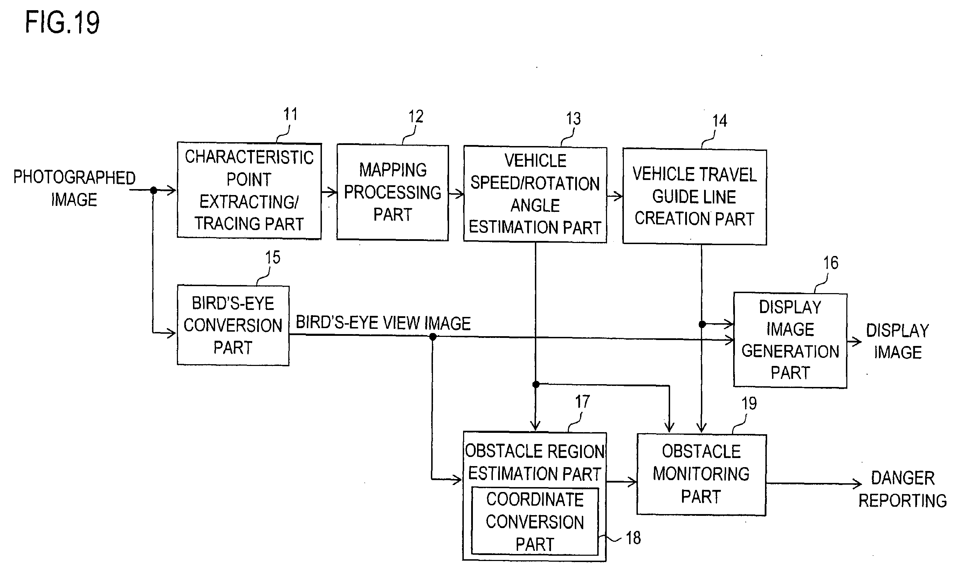

Next, the fourth embodiment will be described. In the fourth embodiment, a functional block diagram of a driving support system corresponding to the first or second embodiment combined with the third embodiment will be exemplarily described. FIG. 19 is a functional block diagram of the driving support system according to the fourth embodiment. The driving support system according to the fourth embodiment includes portions respectively referenced by numerals 11 to 19, and the portions referenced by numerals 11 to 18 are provided in the image processor 2 of Fig 1. The obstacle monitoring part 19 is provided inside or outside of the image processor 2.

A photographed image (camera image) of the camera 1 is supplied to the characteristic point extracting/tracing part 11 and the bird's-eye conversion part 15. The characteristic point extracting/tracing part 11 performs the processing of steps S11 to S13 of FIG. 4, and extracts characteristic points from the photographed image and traces them (also calculate movement vectors). The processing of step S14 of FIG. 14 is executed by the mapping processing part 12 and the bird's-eye conversion part 15. Specifically, the mapping processing part 12 maps on a bird's-eye view coordinate system the characteristic points and the movement vectors extracted or detected by the characteristic point extracting/ tracing part 11, and the bird's-eye conversion part 15 performs bird's-eye conversion on each photographed image to thereby convert each photographed image into a bird's-eye view image. For explanation purposes, the mapping processing part 12 and the bird's-eye conversion part 15 are shown as separate portions, but the both portions function in a similar manner and thus can be integrated into a single portion.

The vehicle speed/rotation angle estimation part 13 performs the processing of step S15 of FIG. 4. Specifically, the vehicle speed/rotation angle estimation part 13, based on the movement vectors on the bird's-eye view coordinate system obtained through the mapping by the mapping processing part 12, estimates the vehicle speed and rotation angle described above. The vehicle travel guide line creation part (passage area estimation part) 14 performs the processing of step S16 of FIG. 4. Specifically, the vehicle travel guide line creation part 14, based on the vehicle speed and rotation angle estimated by the vehicle speed/rotation angle estimation part 13 and the vehicle position information on the bird's-eye view coordinate system, calculates the positions of vehicle travel guide lines on the bird's-eye view coordinate system. The vehicle travel guide lines function as indexes indicating a future passage area (predicated passage area) of the vehicle on the bird's-eye view coordinate.

Then the display image generation part 16 performs the processing of step S17 of FIG. 4. Specifically, the

14

display image generation part 16 superimposes the vehicle travel guide lines having the positions calculated by the vehicle travel guide line creation part 14 onto the bird's-eye view image obtained from the bird's-eye conversion part 15 to thereby generate a display image, and outputs this to the display device 3 of FIG. 1.

The obstacle region estimation part 17 performs the processing of step S21 of FIG. 16 and estimates the obstacle region described above. The coordinate conversion part 18 in the obstacle region estimation part 17 executes coordinate conversion for position adjustment between the two bird's-eye view images required for estimating the obstacle region. The obstacle monitoring part 19 compares the position of the obstacle region estimated by the obstacle region estimation part 17 with the positions of the vehicle travel guide lines created by the vehicle travel guide line creation part 14 to thereby execute the processing of step S22 of FIG. 16, and also further executes the processing of steps S23 to 525.

[Modification, etc.]

Specific numerical values indicated in the above description are just illustrative, and thus needless to say, they can be modified to various numerical values. As modified examples of the above embodiments or points to be noted, notes 1 to 5 are indicated below. Contents described in these notes can be combined together in any manner unless any inconsistency is found.

[Note 1]

The embodiments described above refer to a case where four characteristic points are extracted or detected from a photographed image. However, as is clear from the above description, the number of characteristic points to be extracted or detected may be one or more.

[Note 2]

The technique of obtaining a bird's-eye view image from a photographed image through perspective projection conversion has been described, but the bird's-eye view image may be obtained from the photographed image through planer projection conversion. In this case, a homography matrix (coordinate conversion matrix) for converting coordinates of each pixel on the photographed image into coordinates of each pixel on the bird's-eye view image is obtained at the stage of camera calibration processing. A way of obtaining the homography matrix is well-known. Then to perform the operation shown in FIG. 4, the photographed image may be converted into the bird's-eye view image based on the homography matrix, In this case, mapping the characteristic points and movement vectors onto the bird's-eye view coordinate system in step S14 of FIG. 4 can also be performed based on the homography matrix.

[Note 3]

In the embodiments described above, a display image based on a photographed image obtained from one camera is displayed on the display device 3, but a display image may be generated based on a plurality of photographed images obtained from a plurality of cameras (not shown) installed in the vehicle 100. For example, in addition to the camera 1, one or more cameras can be fitted to the vehicle 100, an image based on a photographed image of the other camera can be merged with the image based on the photographed image of the camera 1 (the display image 270 of FIG. 9 or the display image 370 of FIG. 15), and the merged image obtained by this merging can be finally provided as a display image on the display device 3. This merged image is an all-around bird's-eye view image as described in, for example, JP-A-2006-287892.

In the above embodiments, an automobile (truck) is dealt with as an example of a vehicle, but the invention is also applicable to vehicles not classified as automobiles, and further applicable to moving bodies not classified as vehicles. The moving bodies not classified as vehicles, for example, include no wheels and move by using a mechanism other than the wheels. For example, the invention is also applicable to a robot (not shown), as a moving body, which moves inside a factory through remote control.

[Note 5]

Functions of the image processor 2 of FIG. 1 and the various portions of FIG. 19 can be realized with hardware, software, or hardware and software in combination. All or part of the functions realized by the image processor 2 of FIG. 1 and the various portions of FIG. 19 may be written as a program, and this program may be executed on a computer to realize all or part of these functions.

**Claims**

1. A driving support system including a camera fitted to a moving body to photograph surrounding thereof, obtaining from the camera a plurality of chronologically ordered camera images, and outputting a display image generated from the camera images to a display device, the driving support system comprising:

   a movement vector deriving part extracting a characteristic point from a reference camera image included in the plurality of camera images and also detecting a position of the characteristic point on each of the camera images through tracing processing to thereby derive a movement vector of the characteristic point between the different camera images; and
   an estimation part estimating, based on the movement vector, a movement speed of the moving body and a rotation angle in movement of the moving body,

   wherein, based on the camera images and the estimated movement speed and the estimated rotation angle, the display image is generated.

2. The driving support system according to claim 1, further comprising a mapping part mapping the characteristic point and the movement vector on a coordinate system of the camera images onto a predetermined bird's-eye view coordinate system through coordinate conversion,
   wherein the estimation part, based on the movement vector on the bird's-eye view coordinate system arranged in accordance with a position of the characteristic point on the bird's-eye view coordinate system, estimates the movement speed and the rotation angle.

3. The driving support system according to claim 2,
   wherein the plurality of camera images include first, second, and third camera images obtained at first, second, and third times that come sequentially,
   wherein the mapping part maps onto the bird's-eye view coordinate system the characteristic point on each of the first to third camera images, a movement vector of the characteristic point between the first and second camera images, and a movement vector of the characteristic point between the second and third camera images,
   wherein, when the movement vector of the characteristic point between the first and second camera images and the movement vector of the characteristic point between the second and third camera images are called a first bird's-eye movement vector and a second bird's-eye movement vector, respectively,
   the mapping part arranges a start point of the first bird's-eye movement vector at a position of the characteristic point at the first time on the bird's-eye view coordinate system, arranges an end point of the first bird's-eye movement vector and a start point of the second bird's-eye movement vector at a position of the characteristic point at the second time on the bird's-eye view coordinate system, and arranges an end point of the second bird's-eye movement vector at a position of the characteristic point at the third time on the bird's-eye view coordinate system, and
   the estimation part, based on the first and second bird's-eye movement vectors and a position of the moving body on the bird's-eye view coordinate system, estimates the movement speed and the rotation angle.

4. The driving support system according to any one of claims 1 to 3, further comprising:

   a bird's-eye conversion part subjecting coordinates of each of the camera images to coordinate conversion onto a predetermined bird's-eye view coordinate system to thereby convert each of the camera images into a bird's-eye view image; and
   a passage area estimation part estimating a predicted passage area of the moving body on the bird's-eye view coordinate system based on the estimated movement speed, the estimated rotation angle, and a position of the moving body on the bird's-eye view coordinate system,

   wherein an index in accordance with the predicted passage area is superimposed on the bird's-eye view image to thereby generate the display image.

5. The driving support system according to claim 1, further comprising:

   a bird's-eye conversion part subjecting coordinates of each of the camera images to coordinate conversion onto a predetermined bird's-eye view coordinate system to thereby convert each of the camera images into a bird's-eye view image; and
   a solid object region estimation part making, through image matching, position adjustment of two bird's-eye view images based on two camera images obtained at mutually different times and then obtaining a difference between the two bird's-eye view images to thereby estimate a position, on the bird's-eye view coordinate system, of a solid object region having a height.

6. The driving support system according to claim 1, further comprising a bird's-eye conversion part subjecting coordinates of each of the camera images to coordinate conversion onto a predetermined bird's-eye view coordinate system to thereby convert each of the camera images into a bird's-eye view image,
   wherein, when two bird's-eye view images based on the two camera images obtained at first and second times, which are mutually different, are called first and second bird's-eye view images,
   the driving support system further comprises a solid object region estimation part including a coordinate conversion part,
   the coordinate conversion part, based on a movement distance of the moving body between the first and second times based on the estimated movement speed and also based on the estimated rotation angle corresponding to the first and second times, converts coordinates of either of the first and second bird's-eye view images so that the characteristic points on the two bird's-eye view images overlap each other, and
   the solid object region estimation part, based on a difference between either of the bird's-eye view images subjected to the coordinate conversion and the other bird's-eye view image, estimates a position, on the bird's-eye view coordinate system, of a solid object region having a height.

7. The driving support system according to claim 5 or 6, further comprising:

   a passage area estimation part estimating a predicted passage area of the moving body on the bird's-eye view coordinate system based on the estimated movement speed and the estimated rotation angle and a position of the moving body on the bird's-eye view coordinate system; and
   a solid object monitoring part judging whether or not the predicted passage area and the solid object region overlap each other.

8. The driving support system according to claim 7,
   wherein, when it is judged that the predicted passage area and the solid object region overlap each other, the solid object monitoring part, based on the position of the solid object region and the position and the movement speed of the moving body, estimates a time length until the moving body and a solid object corresponding to the solid object region collide with each other.

9. A vehicle as a moving body,
   wherein the driving support system according to any one of claims 1 to 8 is installed.

FIG.1

CAMERA [1] → IMAGE PROCESSOR [2] → DISPLAY DEVICE [3]

FIG.2

FIG.3

EP 2 015 253 A1

# FIG.4

```
                    ┌──────────────┐
                    │    START     │
                    └──────┬───────┘
                           │
                           ▼
        ┌──────────────────────────────────────┐
   S11  │   TAKE IN PHOTOGRAPHED IMAGES AT      │
        │          DIFFERENT TIMES             │
        └──────────────────┬───────────────────┘
                           │
                           ▼
        ┌──────────────────────────────────────┐
   S12  │     EXTRACT CHARACTERISTIC POINTS     │
        └──────────────────┬───────────────────┘
                           │
                           ▼
        ┌──────────────────────────────────────┐
        │      TRACE CHARACTERISTIC POINTS      │
   S13  │   (CALCULATE MOVEMENT VECTORS OF      │
        │       CHARACTERISTIC POINTS)         │
        └──────────────────┬───────────────────┘
                           │
                           ▼
        ┌──────────────────────────────────────┐
        │      ·MAP MOVEMENT VECTORS OF         │
        │  CHARACTERISTIC POINTS ONTO BIRD'S-EYE│
        │        VIEW COORDINATE SYSTEM         │
   S14  │  ·SUBJECT PHOTOGRAPHED IMAGES TO      │
        │         BIRD'S-EYE CONVERSION         │
        └──────────────────┬───────────────────┘
                           │
                           ▼
        ┌──────────────────────────────────────┐
        │  ESTIMATE VEHICLE SPEED AND ROTATION  │
        │  ANGLE FROM CHARACTERISTIC POINTS     │
   S15  │       AND MOVEMENT VECTORS ON         │
        │  BIRD'S-EYE VIEW COORDINATE SYSTEM    │
        └──────────────────┬───────────────────┘
                           │
                           ▼
        ┌──────────────────────────────────────┐
        │ CALCULATE POSITIONS OF VEHICLE TRAVEL │
        │   GUIDE LINES ON BIRD'S-EYE VIEW      │
   S16  │  COORDINATE SYSTEM BASED ON VEHICLE   │
        │      SPEED AND ROTATION ANGLE         │
        └──────────────────┬───────────────────┘
                           │
                           ▼
        ┌──────────────────────────────────────┐
        │   SUPERIMPOSE VEHICLE TRAVEL GUIDE    │
   S17  │  LINES ON BIRD'S-EYE VIEW IMAGE TO    │
        │  THEREBY GENERATE DISPLAY IMAGE       │
        └──────────────────┬───────────────────┘
                           │
                           ▼
                    ┌──────────────┐
                    │     END      │
                    └──────────────┘
```

# FIG.5A

PHOTOGRAPHED
IMAGE AT TIME t1   210

214 211
213 212

# FIG.5B

PHOTOGRAPHED
IMAGE AT TIME t2   220

224 221
223 222

# FIG.5C

PHOTOGRAPHED
IMAGE AT TIME t3   230

234 231
233 232

# FIG.6

MOVEMENT VECTORS BETWEEN
t1 AND t2 ON PHOTOGRAPHED IMAGE

# FIG.7A

## FIG.7B

## FIG.7C

BIRD'S-EYE VIEW 210a
IMAGE AT TIME t1

BIRD'S-EYE VIEW 220a
IMAGE AT TIME t2

BIRD'S-EYE VIEW 230a
IMAGE AT TIME t3

# FIG.8

MOVEMENT VECTORS BETWEEN
t1 AND t2 ON BIRD'S-EYE VIEW IMAGE

254 251

253 252

FIG.9

DISPLAY·IMAGE 270

271 ~ ~273 ~ 272

275

274

280

281 283 282

VEHICLE WIDTH

## FIG.10A

PHOTOGRAPHED 310
IMAGE AT TIME t1

311
314
312
313

## FIG.10B

PHOTOGRAPHED 320
IMAGE AT TIME t2

324
321
323
322

## FIG.10C

. PHOTOGRAPHED 330
IMAGE AT TIME t3

334
331
333
332

## FIG.11

MOVEMENT VECTORS ON
PHOTOGRAPHED IMAGE

341
342
343
344

# FIG.12A

BIRD'S-EYE VIEW 310a
IMAGE AT TIME t1

# FIG.12B

BIRD'S-EYE VIEW 320a
IMAGE AT TIME t2

# FIG.12C

BIRD'S-EYE VIEW 330a
IMAGE AT TIME t3

# FIG.13

MOVEMENT VECTORS
ON BIRD'S-EYE VIEW IMAGE

351
352

## FIG.14

## FIG.15

DISPLAY IMAGE

# FIG.16

```
              ┌─────────────┐
              │    START    │
              └─────────────┘
                     │
                     ▼
        ┌──────────────────────────────┐
        │  MAKE POSITION ADJUSTMENT OF  │
        │  TWO BIRD'S-EYE VIEW IMAGES AND│
   S21  │  THEN ESTIMATE OBSTACLE REGION│
        │  FROM A DIFFERENCE BETWEEN    │
        │          TWO IMAGES           │
        └──────────────────────────────┘
                     │
                     ▼
            ╱─────────────────╲
           ╱  OBSTACLE REGION   ╲
   S22    ⟨  AND PASSAGE AREA OF  ⟩──── N
           ╲   VEHICLE OVERLAP   ╱
            ╲   EACH OTHER?     ╱
             ╲────────────────╱
                     │ Y
                     ▼
   S23  ┌──────────────────────────────┐
        │  ESTIMATE DISTANCE L TO OBSTACLE│
        └──────────────────────────────┘
                     │
                     ▼
   S24  ┌──────────────────────────────┐
        │   ESTIMATE TIME UNTIL COLLISION│
        └──────────────────────────────┘
                     │
                     ▼
        ┌──────────────────────────────┐
        │  EXECUTE REPORTING PROCESSING │
   S25  │    IN ACCORDANCE WITH TIME    │
        │       UNTIL COLLISION         │
        └──────────────────────────────┘
                     │
                     ▼
              ┌─────────────┐
              │     END     │
              └─────────────┘
```

## FIG.17A

OBSTACLE ON
BIRD'S-EYE VIEW IMAGE
AT TIME t2 AFTER
COORDINATE CONVERSION

~ 401

## FIG.17B

OBSTACLE ON
BIRD'S-EYE VIEW IMAGE
AT TIME t3

~ 402

## FIG.17C

OBSTACLE
REGION

~ 403

## FIG.18

372

411

373

371

$\omega$

$O_A$

R

280

283

# FIG.19

PHOTOGRAPHED IMAGE → **11** CHARACTERISTIC POINT EXTRACTING/ TRACING PART → **12** MAPPING PROCESSING PART → **13** VEHICLE SPEED/ROTATION ANGLE ESTIMATION PART → **14** VEHICLE TRAVEL GUIDE LINE CREATION PART

**15** BIRD'S-EYE CONVERSION PART → BIRD'S-EYE VIEW IMAGE

**16** DISPLAY IMAGE GENERATION PART → DISPLAY IMAGE

**17** OBSTACLE REGION ESTIMATION PART / **18** COORDINATE CONVERSION PART

**19** OBSTACLE MONITORING PART → DANGER REPORTING

EP 2 015 253 A1

Europäisches
Patentamt

European
Patent Office

Office européen
des brevets

# EUROPEAN SEARCH REPORT

Application Number

EP 08 01 2316

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/163343 A1 (KAKINAMI TOSHIAKI [JP] ET AL) 28 July 2005 (2005-07-28) | 1,9 | INV.<br>G06T7/20 |
| Y | * paragraph [0049] - paragraph [0091] * | 2-8 | B60R1/00 |
| Y | SANCHIZ J M ET AL: "Feature correspondence and motion recovery in vehicle planar navigation" PATTERN RECOGNITION, ELSEVIER, GB, vol. 32, no. 12, 1 December 1999 (1999-12-01), pages 1961-1977, XP004175662 ISSN: 0031-3203 * page 1962 - page 1965 * | 2-8 | |
| Y | EP 1 646 008 A (DELPHI TECH INC [US]) 12 April 2006 (2006-04-12) * paragraph [0045] - paragraph [0048] * | 5,6 | |
| Y | EP 1 462 762 A (AISIN SEIKI [JP]) 29 September 2004 (2004-09-29) * paragraph [0017] * * paragraph [0030] * * paragraph [0070] * | 7,8 | TECHNICAL FIELDS SEARCHED (IPC)<br><br>G06T<br>B60R |

The present search report has been drawn up for all claims

| Place of search | Date of completion of the search | Examiner |
|---|---|---|
| Munich | 3 November 2008 | Rockinger, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 01 2316

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-2008

| Patent document cited in search report | | Publication date | Patent family member(s) | | Publication date |
|---|---|---|---|---|---|
| US 2005163343 | A1 | 28-07-2005 | EP 1431120 A1<br>JP 2004198211 A | | 23-06-2004<br>15-07-2004 |
| EP 1646008 | A | 12-04-2006 | NONE | | |
| EP 1462762 | A | 29-09-2004 | FR 2853121 A1<br>JP 2004297808 A | | 01-10-2004<br>21-10-2004 |

EPO FORM P0459

For more details about this annex : see Official Journal of the European Patent Office, No. 12/82

**EP 2 015 253 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3833241 B
- JP 2006268076 A
- JP 2006287892 A